# EUROPEAN PATENT SPECIFICATION

(11) **EP 4 560 508 B1**
(45) Date of publication and mention of the grant of the patent: **08.07.2026**
(21) Application number: 24215064.7
(22) Date of filing: 25.11.2024
(51) Int. Cl.: G06F 21/55, G05B 19/418, H04L 9/40

(54) **ANOMALY DETECTION METHOD AND APPARATUS**
ANOMALIEDETEKTIONSVERFAHREN UND -VORRICHTUNG
PROCÉDÉ ET APPAREIL DE DÉTECTION D'ANOMALIE

(30) Priority: 24.11.2023 CN 202311607276
(43) Date of publication of application: 28.05.2025
(73) Proprietor: New H3C Security Technologies Co., Ltd., Hefei, Anhui 230088 (CN)
(72) Inventor: WANG, Jian, Beijing (CN); FU, Zhiqiang, Beijing (CN); WANG, Qiyong, Beijing (CN); SUN, Songer, Beijing (CN)
(74) Representative: Bandpay & Greuter

(56) References cited:
- WO-A1-2019/220427
- US-A1- 2012 198 277
- US-A1- 2020 073 369
- US-A1- 2021 243 202

## Description

### TECHNICAL FIELD

The disclosure relates to the field of network security, in particular to an anomaly detection method and apparatus.

### BACKGROUND

With the development of 5G and Industrial Internet, enterprises are accelerating their digital transformation, and IT networks and OT networks are showing a trend of interconnection and integration. At the same time, various kinds of cyber-attacks are no longer limited to IT networks, but also gradually penetrate into OT networks. Attacks against OT networks often lead to equipment damage, production downtime and other vicious events, which bring huge losses to enterprises, for example, the nuclear power plant centrifuge attack, a power grid Stuxnet event and so on. Therefore, it is particularly important to monitor and audit the network behaviors of OT networks. In an OT network, mainly equipment operation instructions and production status data are disseminated. The network traffic model is relatively simple than the model in the IT network, and the network behavior model has the characteristics of periodicity and repeatablility, which provides a basis for more refined network behavior identification and detection.

In the related art, by deeply parsing and analyzing operation codes and control parameters of various industrial protocols, instruction-level detection, identification, auditing and blocking of industrial behaviors are realized. However, in the above identification, an abnormal switching of high-level abstract behaviors such as the operation mode of an equipment cannot be detected and identified.
WO2019220427A1 discloses an anomaly detection method comprising obtaining a baseline identifying authorized network traffic patterns within a network, identifying a plurality of network traffic patterns, comparing the plurality of network traffic patterns to the baseline, and providing an alert upon one or more of the plurality of the network traffic patterns not being within the baseline.

### SUMMARY

In view of this, the present disclosure provides an anomaly detection method and apparatus for performing anomaly detection on high-level abstract behaviors of devices in an OT network.

In some aspects, the present disclosure is implemented in the following technical scheme.

According to a first aspect of the present disclosure, there is provided an anomaly detection method, applied to a network security device in an Operational Technology (OT) network, the method including:
performing an instruction parsing process on currently obtained industrial network traffic generated by executing a configured production procedure in the OT network, to obtain control instructions which are sequentially issued by each industrial device in the OT network to perform a corresponding abstract-behavior-switching during execution of the configured production procedure;
matching a target control instruction set constituted for each industrial device based on obtained control instructions of the industrial device, with a pre-established control instruction feature library, where the control instruction feature library includes control instruction feature sets constituted by control instructions issued by each industrial device in the OT network for various abstract-behavior-switching;
in response to a determination that the matching is successful, determining that there is no anomaly in the corresponding abstract-behavior-switching performed by the industrial device during the execution of the configured production procedure;
in response to a determination that the matching fails, determining that there is anomaly in the corresponding abstract-behavior-switching performed by the industrial device during the execution of the configured production procedure.

According to a second aspect of the present application, there is provided an anomaly detection apparatus, which is provided in a network security device in an Operational Technology (OT) network, the apparatus including:
an instruction parsing module, which is to perform an instruction parsing process on currently obtained industrial network traffic generated by executing a configured production procedure in the OT network, to obtain control instructions which are sequentially issued by each industrial device in the OT network to perform a corresponding abstract-behavior-switching during execution of the configured production procedure;
a matching module, which is to match a target control instruction set constituted for each industrial device based on obtained control instructions of the industrial device, with a pre-established control instruction feature library, where the control instruction feature library includes control instruction feature sets constituted by control instructions issued by each industrial device in the OT network for various abstract-behavior-switching;
a detection module, which is to, in response to a determination that the matching performed by the matching module is successful, determine that there is no anomaly in the corresponding abstract-behavior-switching performed by the industrial device during the execution of the configured production procedure, and in response to a determination that the matching performed by the matching module fails, determine that there is anomaly in the corresponding abstract-behavior-switching performed by the industrial device during the execution of the configured production procedure.

### BRIEF DESCRIPTION OF DRAWINGS

FIG. 1 is a schematic flowchart of an anomaly detection method according to an example of the present disclosure.
FIG. 2 is a schematic flowchart of a process of constructing a control instruction feature library according to an example of the present disclosure.
FIG. 3A is a schematic flowchart of another anomaly detection method according to an example of the present disclosure.
FIG. 3B is a schematic diagram of a part of state baseline according to an example of the present disclosure.
FIG. 3C is a schematic diagram of a switching logic of state baseline switching according to an example of the present disclosure.
FIG. 4 is a schematic structural diagram of an anomaly detection apparatus according to an example of the present disclosure.
FIG. 5 is a schematic diagram of a hardware structure of an electronic device implementing an anomaly detection method according to an example of the present disclosure.

### DETAILED DESCRIPTION

Reference will now be made in detail to embodiments, examples of which are illustrated in the accompanying drawings. When the following description refers to the drawings, the same numbers in different drawings indicate the same or similar elements, unless otherwise indicated. The implementations described in the following embodiments are not intended to be representative of all embodiments consistent with the present disclosure. Rather, they are merely examples of apparatus and methods consistent with certain aspects of the present disclosure.

The terms used herein are for the purpose of describing particular embodiments only and are not intended to limit the disclosure. As used in this disclosure, singular forms "a," "an," and "the" are intended to include the plural forms as well, unless the context clearly dictates otherwise. It should also be understood that the term "and/or" as used herein refers to and encompasses any and all possible combinations of one or more of the corresponding listed items.

It should be understood that, although the terms first, second, third, etc. may be used herein to describe various information, the information should not be limited to these terms. These terms are used only to distinguish one type of information from another. For example, the first information may also be referred to as the second information, and similarly, the second information may also be referred to as the first information, without departing from the scope of the present application. Depending on the context, the word "if" as used herein may be interpreted to mean "where ... " or "when... "or "in response to a determination".

Before introducing the present application, the technical terms involved in the present disclosure are introduced:
an IT network refers to a computer network for connections and transferring of data, applications, and resources in the field of information technology; an Operational Technology (OT) network refers to a specific network that runs in an industrial control system (ICS) and is designed to support industrial automation and control applications.

The anomaly detection method provided in the embodiments of the present disclosure is described in detail in the following.

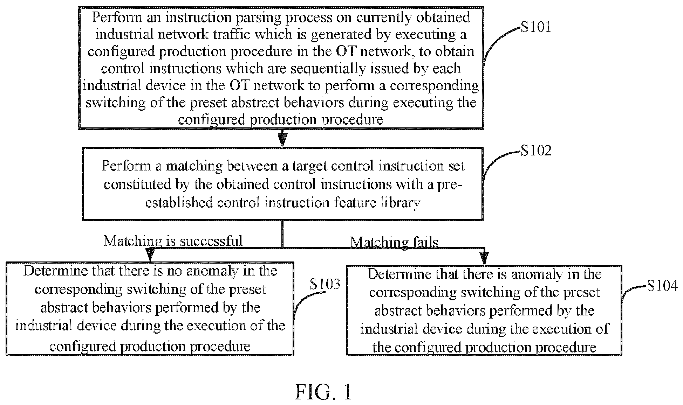

Referring to FIG. 1, FIG. 1 is a flowchart of an anomaly detection method provided in the present application. The method may be applied to a network security device, an industrial situational awareness platform, or other devices in an OT network, and the network security device may be, but is not limited to, an industrial firewall, an audit device for monitoring and auditing industrial network traffic, and the like. When the network security device performs the method, the following blocks may be included.

In S101, an instruction parsing process is performed on currently obtained industrial network traffic which is generated by executing a configured production procedure in the OT network, to obtain control instructions which are sequentially issued by each industrial device in the OT network to perform a corresponding switching of the preset abstract behaviors during executing the configured production procedure.

It shall be noted that, abstract behaviors of each industrial device when executing the above configured production procedure can be the same or different, and can be determined according to the actual situation. Accordingly, control instructions issued by the industrial devices when triggering the corresponding abstract-behavior-switching may be the same or different, which depends on actual conditions.

In this block, the network security device may periodically, in real-time, or regularly obtain industrial network traffic generated by a production procedure (i.e., the above configured production procedure) executed in the OT network. When the network security device obtains the industrial network traffic, the network security device may actively acquire the industrial network traffic, and may also passively receive the industrial network traffic sent by other devices.

On this basis, the network security device may perform an instruction parsing process on the obtained industrial network traffic. In the instruction parsing process, each industrial device in the industrial network traffic may be identified, and the control instructions issued by each industrial device when executing the configured production procedure may be identified.

In some examples, when the network security device identifies each industrial device in the industrial network traffic, the identifying may be based on a protocol address or device fingerprint information. In some examples, the network security device may be configured with a device fingerprint library or a device asset registry library in advance, and device fingerprint information such as characteristic fields of each industrial device in the OT network is recorded in the device fingerprint library; key information such as IP addresses and MAC addresses of each industrial device in the OT network are pre-registered in the device asset registry library. The device fingerprint library is a passive identification means, where the industrial network traffic carries fingerprint information such as a corresponding characteristic field of each industrial device, and based on the fingerprint information in combination with the device fingerprint library, each industrial device can be identified. Similarly, the device asset registry library is an active identification means where key information such as IP addresses and MAC addresses of the assets is registered in the device asset registry library, and with the support of the device asset registry library, the network security device may identify each industrial device based on the registered information.

On this basis, after each industrial device which executes the configured production procedure is identified based on the industrial network traffic, control instructions issued by each industrial device in the industrial network traffic when executing the configured production procedure can be further identified based on an industrial protocol. In some examples, after the industrial network traffic generated by currently executing the configured production procedure is obtained, the industrial network traffic is subject to an instruction parsing process. For example, operation actions which each industrial device executes to trigger the switching of the preset abstract behaviors during execution of the configured production procedure may be firstly identified, and then based on the obtained operation actions of the industrial device, control instructions issued by the industrial device for each of the operation actions are obtained. Since the operation actions may reflect the switching of the preset abstract behaviors of the industrial device, industrial instructions issued by each industrial device when executing the configured production procedure can be obtained.

In order to better understand this embodiment, an operation state is taken as an example of the above preset abstract behavior for description. For example, the control instructions for a switching of the operation state from a shutdown state to a startup state triggered by a certain industrial device when performing a shutdown operation and a startup operation may include the following. First, the industrial device may issue a power up instruction to turn on a power supply of the industrial device. Then the industrial device may issue a device self-test instruction to perform self-test of the industrial device, and finally issue a state inquiry instruction to query whether the normal startup is successful. Therefore, based on the above switching of the abstract behaviors, the control instructions issued to trigger the switching of the abstract behaviors may be obtained, which include a power up instruction→a device self-test instruction→a state inquiry instruction.

In S102, a matching between a target control instruction set constituted by the obtained control instructions with a pre-established control instruction feature library is performed, if the matching is successful, block S103 is executed, and if the matching fails, block S104 is executed.

Where the control instruction feature library includes control instruction feature sets constituted by control instructions issued by each device in the OT network for different switching of preset abstract behaviors.

Taking the switching from the shutdown state to the startup state as an example, the constituted target control instruction set can be expressed as: {power up instruction; device self-test instruction; state inquiry instruction}.

It should be noted that the control instruction feature library can be configured manually or constructed by a traffic collection tool. For example, a user can manually perform analysis based on relevant protocols of an industrial device according to device information such as illustration and operation manuals about the control instructions in the device specification to obtain a control instruction feature set constituted by correct control instructions issued by each industrial device for various abstract-behavior switching, so as to generate the control instruction feature library; or, a traffic collection tool may be set in the network security device, the industrial network traffic generated by each industrial device under each abstract-behavior-switching can be collected through the traffic collection tool in a controllable operating environment, and the relationship between the control instructions and the abstract-behavior-switching in the industrial network traffic can be observed, analyzed, and obtained after simple organization. By taking the abstract behavior as an operation state as an example, the industrial network traffic generated when each industrial device performs switching of the operation state may be collected by the traffic collection tool and subject to an instruction identification process so as to obtain the relationship between the switching of each operation state of the industrial device and the issued control instructions, thereby constructing a control instruction feature set of the industrial device under each operation state; by analogy, the control instruction feature set of each industrial device under the corresponding operation state may be obtained, and finally, the control instruction feature library may be constructed.

It is worth noting that the control instructions in the above control instruction feature set are sequentially issued according to the switching sequence of the operation states, for example, the control instructions in the control instruction feature set are subject to a time sequence.

In some examples, the above abstract behavior may be determined according to the behaviors commonly performed by the industrial devices in the production procedure in the OT network. In some examples, the above abstract behavior may be determined according to various production procedures existing in an actual OT network. For example, the above abstract behavior may include, but is not limited to, an operation state, an operation mode, etc. Accordingly, the operation state may include, but is not limited to, a startup state, a shutdown state, a standby state, and a debugging state, etc. The operation mode may include, but is not limited to: a low-speed mode, a high-speed mode, an ultra-high-speed mode, etc. It is worth noting that the operation state is closely related to the operation mode. For example, an industrial device may have different operation states in different operation modes. In addition, an industrial device may also have different operation states in the same operation mode.

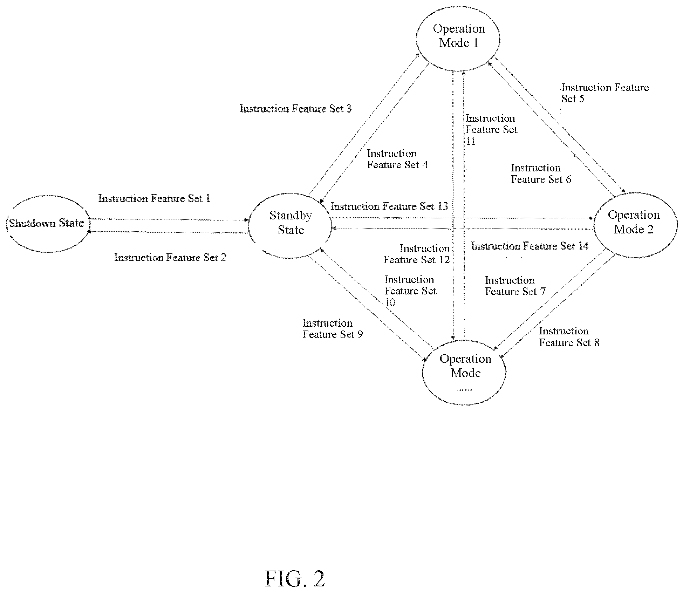

In order to better understand this embodiment, the construction process of the control instruction feature library shown in FIG. 2 may be taken as an example for illustration. In FIG. 2, the abstract behavior may include an operation state and an operation mode. For example, in FIG. 2, the operation state may include a startup state and a shutdown state, and the operation mode may include an operation mode 1, an operation mode 2, and so on. In this example, instruction feature sets generated when the industrial device performs switching of the operation state may be obtained, such as an instruction feature set 1 constituted by control instructions to be triggered for switching from the shutdown state to the standby state as shown in FIG. 2, and an instruction feature set 2 constituted by control instructions to be triggered for switching from the standby state to the shutdown state as shown in FIG. 2. A control instruction feature set constituted by control instructions to be triggered for switching between an operation state and an operation mode may further be obtained, such as an instruction feature set 3, an instruction feature set 4, and an instruction feature set 9, etc. in FIG. 2; and a control instruction feature set constituted by control instructions to be triggered for switching between the operation modes may further be obtained, such as an instruction feature set 5 and an instruction feature set 8, etc. in FIG. 2. Thus, based on these instruction feature sets, a series of control instruction feature sets corresponding to the switching of each industrial device from one operation state or operation mode to another operation state or operation mode can be constructed, and the control instruction feature library is further constructed.

On this basis, it can be determined whether a target control instruction set of a certain industrial device is consistent with a certain control instruction feature set in the control instruction feature library constructed by the example in FIG. 2, and when they are consistent, it is determined that there is no anomaly when the industrial device performs the corresponding abstract-behavior-switching during the execution of the configured production procedure, that is, block S103 is executed; when they are not consistent, it is determined that there is anomaly when the industrial device performs the corresponding abstract-behavior-switching during the execution of the configured production procedure, that is, the block S104 is executed. Therefore, the anomaly detection of abstract behaviors in the OT network is realized.

It should be noted that the control instructions in the target control instruction set and the control instructions in the control instruction feature set of the control instruction feature library are arranged in time sequence based on the trigger time of each control instruction. In this way, when a certain target control instruction feature set is consistent with a certain target control instruction feature set, it indicates that the control instructions sequentially issued by the corresponding industrial device are the instructions that are normally issued when a normal abstract-behavior-switching is performed in the normal production procedure, which indicates that no anomaly exists when the industrial device performs switching of abstract behaviors in the production procedure, and further improves the accuracy of anomaly detection by setting ordered control instruction feature sets.

In some examples, in this embodiment, after block S101 is executed, the method may further include following process: performing a merging process for the identical control instructions sequentially issued by the industrial device, so that the target control instruction set retains one identical control instruction.

In some examples, in practical applications, some control instructions may be retransmitted more than once due to some reasons. Therefore, in order to improve the accuracy of the anomaly detection result, the embodiment proposes to merge the instructions to avoid false detection.

In block S103, it is determined that there is no anomaly in the corresponding switching of the preset abstract behaviors performed by the industrial device during the execution of the configured production procedure.

In block S104, it is determined that there is anomaly in the corresponding switching of the preset abstract behaviors performed by the industrial device during the execution of the configured production procedure.

In some examples, when the anomaly is detected, audit, alarm or blocking processing may be performed to ensure the security of the OT network.

By implementing the anomaly detection method provided in the present disclosure, after the industrial network traffic generated by currently executing the configured production procedure is obtained, the industrial network traffic is subject to an instruction parsing process so as to identify each control instruction issued by each industrial device when executing the configured production procedure; and because the switching of the preset abstract behaviors of the industrial device can be reflected between control instructions, based on the target control instruction set constituted by the control instructions, it can be identified whether there is anomaly in the abstract-behavior-switching performed by the industrial device. That is, the present disclosure proposes to identify the target control instruction set based on a preconfigured control instruction feature library, when the matching is successful, it is determined that there is no anomaly; when the matching is unsuccessful, it indicates that there is anomaly. As a result, anomaly detection of high-level abstract behaviors of devices in the OT network is realized.

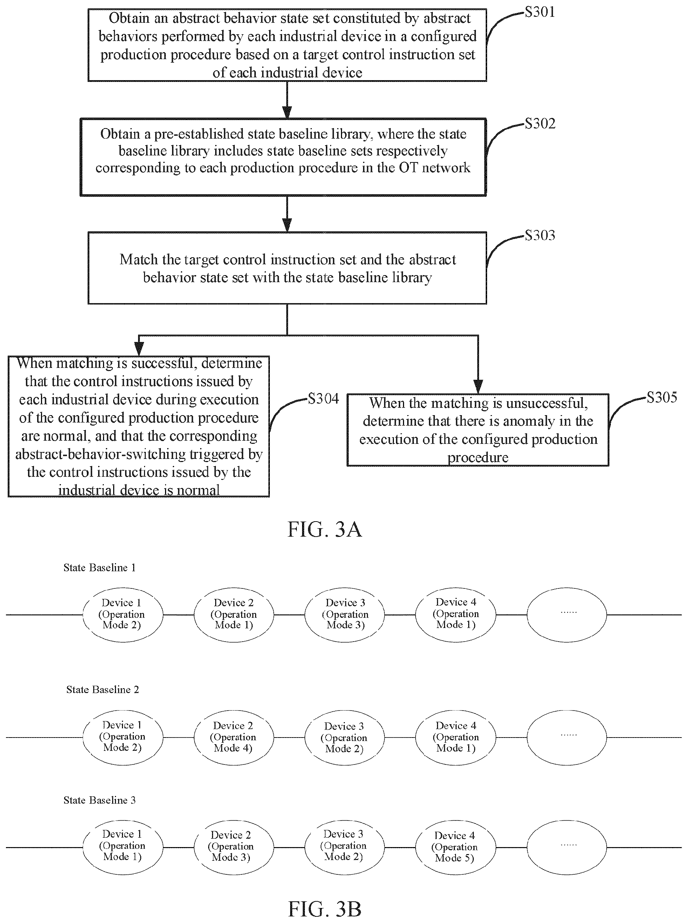

Based on the embodiment, the anomaly detection method provided in the embodiment may further include a detection process shown in FIG. 3A, which may include the following blocks.

In S301, an abstract behavior state set constituted by abstract behaviors performed by each industrial device in a configured production procedure is obtained based on a target control instruction set of each industrial device.

Where the abstract behavior state set includes: a first state line and a second state line, where the first state line is constituted by abstract behavior states before the corresponding abstract-behavior-switching of each industrial device during the configured production procedure, and the second state line is constituted by abstract behavior states after the corresponding abstract-behavior-switching of each industrial device during the configured production procedure.

In this block, after the target control instruction set of each industrial device is obtained, for each industrial device and based on the control instructions in the corresponding target control instruction set, the abstract behavior states before and after switching of the corresponding abstract behavior of the industrial device after the control instructions are issued may be determined. Taking the abstract behavior state as the operation mode as an example, after executing the control instructions in the target control instruction set, the industrial device may switch from an operation mode 1 to an operation mode 2; taking the abstract behavior as the operation state as an example, after executing the control instructions in the target control instruction set, the industrial device may switch from an operation state 1 to an operation state 2; taking the abstract behavior as the operation state and the operation mode as an example, after executing the control instructions in the target control instruction set, the industrial device may switch from an operation state 1 to an operation mode 1, etc. By analogy, the abstract behavior states before and after the switching of the corresponding abstract behavior of each industrial device after each industrial device executes the corresponding target control instruction set may be obtained. In some examples, if a certain industrial device does not rigger triggering of a corresponding abstract behavior, the abstract behavior states of the industrial device in the first state line and the second state line are the same.

On this basis, the abstract behavior state set may be obtained referring to the time sequence. In some examples, based on each control instruction issued by each industrial device, the abstract behavior states of each industrial device before and after abstract-behavior-switching are determined if the abstract-behavior-switching exists; therefore, a first state line and a second state line are obtained which are respectively constituted by abstract behavior states of the industrial devices before and after abstract-behavior-switching if the abstract-behavior-switching occurs. In order to better understand this embodiment, three industrial devices participating in the execution of the configured production procedure may be taken as an example. Before the switching of the operation states, an industrial device 1 is in an operation state 1, an industrial device 2 is in an operation mode 1, and an industrial device 3 is in an operation mode 3. When the industrial device 1 sends a control instruction 1, and the industrial device 2 sends a control instruction 2 to trigger the switching of the abstract behaviors, then the industrial device 1 is in an operation state 2, the industrial device 2 is in an operation mode 2, and the industrial device 3 is in an operation mode 3. The first state line thus obtained is: industrial device 1: operation state 1---industrial device 2: operation mode 1-industrial device 3: operation mode 3; and the second state line is: industrial device 1: operation state 2---industrial device 2: operation mode 2---industrial device 3: operation mode 3. By analogy, the first state line and the second state line before and after each abstract-behavior-switching in the production procedure are also obtained.

In S302, a pre-established state baseline library is obtained, where the state baseline library includes state baseline sets respectively corresponding to each production procedure in the OT network.

Where the state baseline set corresponding to each production procedure includes a corresponding relationship between each normal abstract-behavior-switching existing in the production procedure, a first state baseline constituted by abstract behavior states of each industrial device before the switching, a second state baseline constituted by abstract behavior states of each industrial device after the switching, and a control instruction rule set to be issued by a target industrial device when triggering the normal abstract-behavior-switching, where the control instruction rule set includes a corresponding relationship between a target industrial device involved when triggering the normal abstract-behavior-switching, and the control instruction feature set of the target industrial device.

In this block, since each production procedure in the OT network may involve many industrial devices, and these industrial devices need to cooperate with each other to effectively complete a production task, the production procedure may be analyzed in advance to obtain an abstract behavior baseline constituted by abstract behavior states of all normal and permitted abstract behaviors of each industrial device in each production procedure, which is record as the first state baseline or the second state baseline, so that the state baseline set may be constructed and obtained. In order to better understand the processing of the state baseline, a part of the state baseline shown in FIG. 3B may be taken as an example for illustration. The abstract behavior in FIG. 3B is the operation mode. The state baseline 1 constituted by the permitted operation modes when each industrial device executes a certain production procedure may include: device 1: operation mode 2 --- device 2: operation mode 1 --- device 3: operation mode 3 --- device 4: operation mode 4, etc.

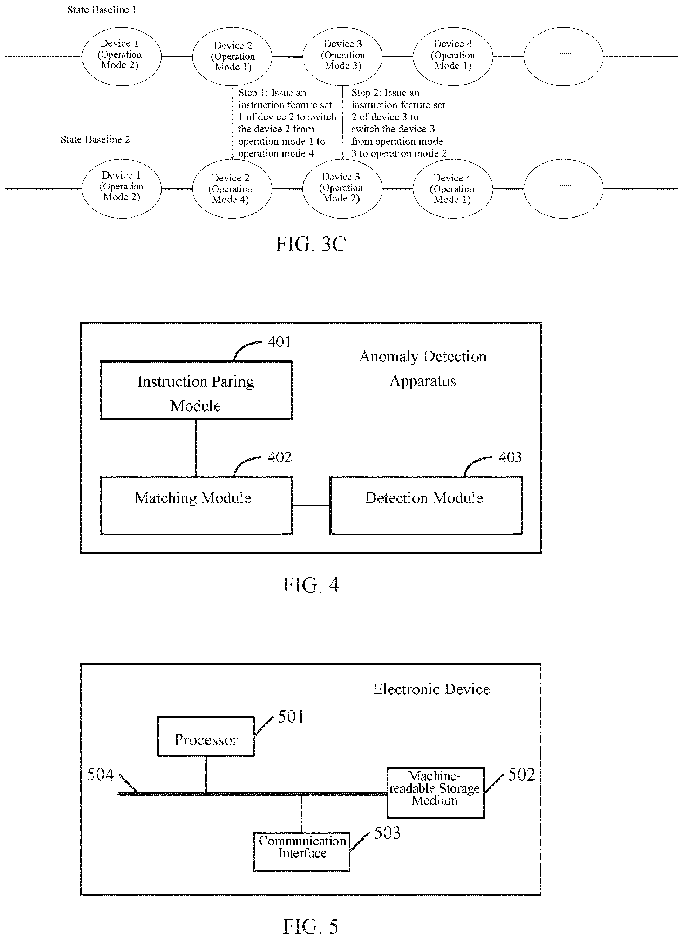

In addition, when the first state line and the second state line are respectively consistent with the first state baseline and the second state baseline, it cannot be determined whether there is anomaly in executing the production procedure because the correctness of the control instructions needs to be considered during the state switching. Therefore, in this embodiment, the corresponding state baseline set configured for each production procedure is further added with control instructions to be triggered by the corresponding target industrial device when triggering each state baseline. As shown in FIG. 3C, FIG. 3C shows the control instructions required to be triggered from the state baseline 1 to the state baseline 2, for example, the device 2 is required to issue the instruction feature set 1 to switch the device 2 from the operation mode 1 to the operation mode 4, and the device 3 is required to issue the instruction feature set 2 in order to switch the device 3 from the operation mode 3 to the operation mode 2, and "device 2: instruction feature set 1, device 3: instruction feature set 2" is one control instruction rule set.

In S303, the target control instruction set and the abstract behavior state set are matched with the state baseline library.

In this block, since the target control instruction set of each industrial device in the configured production procedure may cause the switching from the first state line to the second state line, after the state baseline library is obtained, the state baseline set corresponding to the configured production procedure can be obtained from the state baseline library. And then whether there is a corresponding relationship between the first state line, the second state line, the industrial device and the target control instruction set in the state baseline set or not is determined, if yes, it is determined that the control instructions issued by each industrial device when executing the configured production procedure are normal, and it is determined that the corresponding abstract-behavior-switching triggered by the control instructions issued by the industrial devices is normal, that is, block S304 is executed; if no, block S305 is executed. In this way, the anomaly detection of the production procedure is realized.

In S304, when the target control instruction set and the abstract behavior state set are matched with the state baseline set corresponding to the set production procedure, it is determined that the control instructions issued by each industrial device during execution of the configured production procedure are normal, and that the corresponding abstract-behavior-switching triggered by the control instructions issued by the industrial device is normal.

In some examples, when it is determined that the control instructions and the corresponding abstract-behavior-switching are normal, the industrial network traffic is permitted to pass through.

In S305, when the matching is unsuccessful, it is determined that there is anomaly in the execution of the configured production procedure.

In this block, when the anomaly is detected, audit, alarm or blocking processing can be performed to ensure the security of the OT network.

Further, the method provided in this embodiment may include: identifying an existing abnormal object during the execution of the configured production procedure according to the target control instruction sets, the abstract behavior state set, and the state baseline set corresponding to the configured production procedure.

After the matching process in block S304 is performed, an inconsistent target control instruction set and/or an inconsistent abstract behavior state set may be found. For example, when the matching of the target control instruction set is unsuccessful, it indicates that the abstract behavior state set has inconsistent matching, so that the first state line in the abstract behavior state set can be compared with the first state baseline in the state baseline set corresponding to the configured production procedure, and the second state line may be compared with the second state baseline. Therefore, the industrial device and the abstract behavior state of the industrial device in the abnormal state line, namely the abnormal object, may be identified. For example, when the matching of the abstract behavior state set is successful, the target control instruction sets may be matched against the control instruction rule sets constructing the first state baseline and the second state baseline one by one, so as to identify the abnormal control instruction and the industrial device thereof, that is, the abnormal object. In this way, it is convenient for operation and maintenance personnel to deal with anomaly, such as strengthening the corresponding security protection strategy and so on.

Based on any one of the above embodiments, in the embodiment, while any one of the embodiments is executed, a deep parsing process may be performed based on the industrial protocol, so as to implement anomaly detection on the control instructions and parameters of the industrial protocol, and anomaly detection can be implemented by performing statistical analysis on industrial control traffic and constructing a traffic baseline.

In some examples, it is important that a user can arrange and define the control instruction feature set and the state baseline library, thereby avoiding the manufacturer's deep involvement in the internal procedure design of the enterprise, and leaving this part of work to the user by providing standard and easy-to-use interfaces. In view of this, based on any of the above embodiments, this embodiment may further include the following process: receiving an edit instruction for a target control instruction in the control instruction feature set; and adjusting the target control instruction in the control instruction feature set according to the edit instruction.

Specifically, this embodiment also provides a custom function for arranging control instructions which can arrange the control instructions, and arrange and combine the industrial control instructions according to a specific sequence to construct a control instruction feature set. Therefore, a user can initiate an edit instruction of the target control instruction to the network security device, so that the network security device adjusts the target control instruction in the control instruction feature set after receiving the edit instruction, and thus the user can customize arrangements of the control instruction feature set according to the industrial device of the user.

It is noted that the control instruction feature set may be implemented in an industrial situational awareness platform or a network security device. If the control instruction feature set is in the industrial situational awareness platform, after completing the editing function according to the above process, the industrial situational awareness platform may deliver the obtained control instruction feature set after editing to a network security device, so that the network security device performs real-time detection and audit according to the new control instruction feature set.

In some examples, based on any one of the above embodiments, the embodiment may further include the following process: receiving an edit instruction for the state baseline set; adjusting a target object in a target state baseline set in the state baseline library according to the edit instruction, where the target object is a first state baseline, a second state baseline, or a control instruction rule set.

Specifically, the embodiment may further provide an editing function of the state baseline set, that is, after receiving an edit instruction for the state baseline set, adjustments may be made according to the target object that the user expects to arrange, so that the abstract behaviors of each industrial device can be arranged and combined according to the production procedure to construct device state baseline features under the normal procedure. Users can adjust the target objects in the state baseline set according to their own industrial devices to meet the needs of the actual production procedures.

It should be noted that if the above state baseline set is in the industrial situational awareness platform, the industrial situational awareness platform may deliver the edited state baseline set to a network security device after completing the editing function according to the above process, so that the network security device can perform real-time detection and audit according to the new state baseline set.

Based on the same inventive concept, the present disclosure further provides an anomaly detection apparatus corresponding to the anomaly detection method. The specific implementation of the anomaly detection apparatus may refer to the description of the anomaly detection method, and will not be discussed here.

Referring to FIG. 4, FIG. 4 is an anomaly detection apparatus provided in an embodiment of the present application, which is provided in a network security device in an OT network, and the apparatus includes:
an instruction parsing module 401, which is to perform an instruction parsing process on currently obtained industrial network traffic generated by executing a configured production procedure in the OT network, to obtain control instructions which are sequentially issued by each industrial device in the OT network to perform a corresponding abstract-behavior-switching during execution of the configured production procedure;
a matching module 402, which is to match a target control instruction set constituted for each industrial device based on obtained control instructions of the industrial device, with a pre-established control instruction feature library, where the control instruction feature library includes control instruction feature sets constituted by control instructions issued by each industrial device in the OT network for various abstract-behavior-switching.

The detection module 403, which is to, when the matching performed by the matching module 402 is successful, determine that there is no anomaly in the corresponding abstract behavior-switching performed by the industrial device during the execution of the configured production procedure, and when the matching performed by the matching module 402 fails, determine that there is anomaly in the corresponding abstract-behavior-switching performed by the industrial device during the execution of the configured production procedure.

In some examples, based on the above example, in this example, the apparatus may further include:
an obtaining module (not shown in the figure), which is to, in response to a determination that the matching performed by the matching module is successful for the target control instruction set of each industrial device, based on the target control instruction set of each industrial device, obtain an abstract behavior state set formed based on abstract behaviors of each industrial device during the configured production procedure, where the abstract behavior state set includes a first state line constituted by abstract behavior states before the corresponding abstract-behavior-switching of each industrial device during the configured production procedure, and a second state line constituted by abstract behavior states after the corresponding abstract-behavior-switching of each industrial device during the configured production procedure;
an acquiring module (not shown in the figure), which is to obtain a pre-established state baseline library, where the state baseline library includes a state baseline set respectively corresponding to each production procedure existing in the OT network, the state baseline set corresponding to each production procedure includes a corresponding relationship between each normal abstract-behavior-switching existing in the production procedure, a first state baseline constituted by abstract behavior states of each industrial device before the switching, a second state baseline constituted by abstract behavior states of each industrial device after the switching, and a control instruction rule set to be issued by a target industrial device when triggering the normal abstract-behavior-switching, the control instruction rule set includes a corresponding relationship between a target industrial device involved when triggering the normal abstract-behavior-switching and the control instruction feature set of the target industrial device.

The matching module 402 is further to match the target control instruction sets and the abstract behavior state set, with the state baseline library.

The detection module 403 is to, in response to a determination that the matching result of the matching module 402 is that the target control instruction sets and the abstract behavior state set are matched with the state baseline set corresponding to the configured production procedure, determine that the control instructions issued by each industrial device during the execution of the configured production procedure are normal, and that the corresponding abstract-behavior-switching triggered by the control instructions issued by each industrial device is normal, and in response to a determination that the matching result of the matching module 402 is not matched, determine that anomaly exists during the execution of the configured production procedure.

Furthermore, the apparatus includes:
an identification module (not shown in the figure), which is to identify an abnormal object existing during the execution of the configured production procedure according to the target control instruction sets, the abstract behavior state set and the state baseline set corresponding to the configured production procedure.

In some examples, based on any one of the above examples, the anomaly detection apparatus in the example may further include:
a merging process module (not shown in the figure), which is to, before the matching module 402 matches the target control instruction set constituted for each industrial device based on the obtained control instructions of the industrial device with the pre-established control instruction feature library, perform a merging process for identical control instructions sequentially issued by the industrial device to ensure that one identical control instruction is retained in the target control instruction set.

In some examples, based on any one of the above examples, the anomaly detection apparatus in the example may further include:
a first receiving module (not shown in the figures), which is to receive an edit instruction for a target control instruction in the control instruction feature set;
a first adjusting module (not shown in the figures), which is to adjust the target control instruction in the control instruction feature set according to the edit instruction.

In some examples, based on any one of the above examples, the anomaly detection apparatus in the example may further include:
a second receiving module (not shown in the figures), which is to receive an edit instruction for the state baseline set;
a second adjusting module (not shown in the figures), which is to adjust a target object in a target state baseline set in the state baseline library according to the edit instruction, where the target object is a first state baseline, a second state baseline, or a control instruction rule set.

Based on the same inventive concept, an example of the present disclosure provides an electronic device, which may be, but is not limited to, the network security device or the industrial situational awareness platform. As shown in FIG. 5, the electronic device includes a processor 501 and a machine-readable storage medium 502 storing a computer program executable by the processor 501, the processor 501 is caused by the computer program to perform the anomaly detection method provided in any of the examples of the present disclosure. In addition, the electronic device further includes a communication interface 503 and a communication bus 504, where the processor 501, the communication interface 503, and the machine-readable storage medium 502 communicate with each other through the communication bus 504.

The communication bus referred to by the aforementioned electronic device may be a peripheral component interconnect (PCI) bus or an extended industry standard architecture (EISA) bus, etc. The communication bus can be divided into an address bus, a data bus, a control bus and the like. Only one bold line is shown for ease of illustration, but it does not indicate that there is only one bus or one type of bus.

The communication interface is used for communications between the electronic device and other devices.

The machine-readable storage medium 502 described above may be a memory which may be a Random Access Memory (RAM), RAM), a Double Data Rate Synchronous Dynamic Random Access Memory (DDR SRAM), or a non-volatile memory (NVM) such as at least one disk storage. In some examples, the memory may be at least one storage device located remotely from the aforementioned processor.

The processor may be a general-purpose processor, including a Central Processing Unit (CPU), a Network Processor (NP), and the like; or may be a Digital Signal Processor (DSP), an Application Specific Integrated Circuit (ASIC), a Field-Programmable Gate Array (FPGA) or other programmable logic device, a discrete gate or transistor logic device, a discrete hardware component.

For the embodiments of the electronic device and the machine-readable storage medium, since the method contents involved are basically similar to those in the foregoing embodiments of the method, the description is relatively simple, and reference can be made to some descriptions of the embodiments of the method for related matters.

It is noted that relational terms such as first and second and the like may be used herein only to distinguish one entity or operation from another entity or operation without necessarily requiring or implying any such actual relationship or order between such entities or operations. Moreover, the terms "comprise," "include," or any other variation thereof, are intended to cover a non-exclusive inclusion, such that a process, method, article, or apparatus that includes a list of elements does not include only those elements but may include other elements not expressly listed or inherent to such process, method, article, or apparatus. Without further restriction, a defined element limited by the statement "including a..", does not preclude the presence of another identical element in the process, method, article, or apparatus comprising the element.

The implementation process of the functions and effects of each unit/module in the above apparatus is detailed in the implementation process of the corresponding blocks in the above method, and will not be described here.

For the apparatus embodiment, since it basically corresponds to the method embodiment, it is enough to refer to the description of the method embodiment. The above-described embodiments of the apparatus are merely illustrative, where the units/modules illustrated as separate components may or may not be physically separated, and the components shown as units/modules may or may not be physical units/modules, i.e., may be located in one place, or may be distributed over a plurality of network elements/modules. Part or all of the units/modules can be selected according to actual needs to achieve the purpose of the solution of the present disclosure. Those of ordinary skill in the art can understand and implement it without creative effort.

The above description is only a preferred embodiment of the present disclosure, and is not intended to limit the present disclosure. Any modification, equivalent substitution, improvement, etc. made within the spirit and principle of the present disclosure shall be included in the scope of protection of this disclosure.

## Claims

1. An anomaly detection method, applied to a network security device in an Operational Technology, OT, network, the method comprising:
(S101) performing an instruction parsing process on currently obtained industrial network traffic generated by executing a configured production procedure in the OT network, to obtain control instructions which are sequentially issued by each industrial device in the OT network to perform a corresponding abstract-behavior-switching during execution of the configured production procedure;
(S102) matching a target control instruction set constituted for each industrial device based on obtained control instructions of the industrial device, with a pre-established control instruction feature library, wherein the control instruction feature library comprises control instruction feature sets constituted by control instructions issued by each industrial device in the OT network for various abstract-behavior-switching;
(S103) in response to a determination that the matching is successful, determining that there is no anomaly in the corresponding abstract-behavior-switching performed by the industrial device during the execution of the configured production procedure;
(S104) in response to a determination that the matching fails, determining that there is anomaly in the corresponding abstract-behavior-switching performed by the industrial device during the execution of the configured production procedure.

2. The method according to claim 1, wherein in response to a determination that the matching is successful for the target control instruction set of the industrial device, the method further comprises:
(S301) based on the target control instruction set of the industrial device, obtaining an abstract behavior state set formed based on abstract behaviors of the industrial device during the configured production procedure,
wherein the abstract behavior state set comprise:
a first state line constituted by abstract behavior states before a corresponding abstract-behavior-switching of the industrial device during the configured production procedure, and
a second state line constituted by abstract behavior states after the corresponding abstract-behavior-switching of the industrial device during the configured production procedure;
(S302) obtaining a pre-established state baseline library, wherein the state baseline library comprises a state baseline set respectively corresponding to each production procedure existing in the OT network,
the state baseline set corresponding to each production procedure comprises a corresponding relationship between each normal abstract-behavior-switching existing in the production procedure, a first state baseline constituted by abstract behavior states of each industrial device before the switching, a second state baseline constituted by abstract behavior states of each industrial device after the switching, and a control instruction rule set to be issued by a target industrial device when triggering the normal abstract-behavior-switching,
the control instruction rule set comprises a corresponding relationship between a target industrial device involved when triggering the normal abstract-behavior-switching and the control instruction feature set of the target industrial device;
(S303) matching the target control instruction sets and the abstract behavior state set, with the state baseline library;
(S304) in response to a determination that the target control instruction sets and the abstract behavior state set are matched with the state baseline set corresponding to the configured production procedure, determining that the control instructions issued by the industrial device during the execution of the configured production procedure are normal, and that the corresponding abstract-behavior-switching triggered by the control instructions issued by the industrial device is normal; and
(S305) in response to a determination that the target control instruction sets and the abstract behavior state set are not matched with the state baseline set corresponding to the configured production procedure, determining that anomaly exists during the execution of the configured production procedure.

3. The method according to claim 2, wherein the method further comprises:
identifying an abnormal object existing during the execution of the configured production procedure according to the target control instruction sets, the abstract behavior state set and the state baseline set corresponding to the configured production procedure.

4. The method according to claim 1, wherein before matching the target control instruction set constituted for each industrial device based on the obtained control instructions of the industrial device with the pre-established control instruction feature library, the method further comprises:
performing a merging process for identical control instructions sequentially issued by the industrial device to ensure that one identical control instruction is retained in the target control instruction set.

5. The method according to claim 1, wherein the method further comprises:
receiving an edit instruction for a target control instruction in the control instruction feature set;
adjusting the target control instruction in the control instruction feature set according to the edit instruction.

6. The method according to claim 2, wherein the method further comprises:
receiving an edit instruction for the state baseline set;
adjusting a target object in a target state baseline set in the state baseline library according to the edit instruction, wherein the target object is a first state baseline, a second state baseline, or a control instruction rule set.

7. An anomaly detection apparatus, provided in a network security device in an Operational Technology, OT, network, the apparatus comprising:
an instruction parsing module (401), which is to perform an instruction parsing process on currently obtained industrial network traffic generated by executing a configured production procedure in the OT network, to obtain control instructions which are sequentially issued by each industrial device in the OT network to perform a corresponding abstract-behavior-switching during execution of the configured production procedure;
a matching module (402), which is to match a target control instruction set constituted for each industrial device based on obtained control instructions of the industrial device, with a pre-established control instruction feature library, wherein the control instruction feature library comprises control instruction feature sets constituted by control instructions issued by each industrial device in the OT network for various abstract-behavior-switching;
a detection module (403), which is to, in response to a determination that the matching performed by the matching module is successful, determine that there is no anomaly in the corresponding abstract-behavior-switching performed by the industrial device during the execution of the configured production procedure, and in response to a determination that the matching performed by the matching module fails, determine that there is anomaly in the corresponding abstract-behavior-switching performed by the industrial device during the execution of the configured production procedure.

8. The apparatus according to claim 7, further comprising:
an obtaining module, which is to, in response to a determination that the matching performed by the matching module is successful for the target control instruction set of the industrial device, based on the target control instruction set of the industrial device, obtain an abstract behavior state set formed based on abstract behaviors of the industrial device during the configured production procedure, wherein the abstract behavior state set comprises a first state line constituted by abstract behavior states before a corresponding abstract-behavior-switching of the industrial device during the configured production procedure, and a second state line constituted by abstract behavior states after the corresponding abstract-behavior-switching of the industrial device during the configured production procedure;
an acquiring module, which is to obtain a pre-established state baseline library, wherein the state baseline library comprises a state baseline set respectively corresponding to each production procedure existing in the OT network, the state baseline set corresponding to each production procedure comprises a corresponding relationship between each normal abstract-behavior-switching existing in the production procedure, a first state baseline constituted by abstract behavior states of each industrial device before the switching, a second state baseline constituted by abstract behavior states of each industrial device after the switching, and a control instruction rule set to be issued by a target industrial device when triggering the normal abstract-behavior-switching, the control instruction rule set comprises a corresponding relationship between a target industrial device involved when triggering the normal abstract-behavior-switching and the control instruction feature set of the target industrial device;
wherein the matching module is further to match the target control instruction sets and the abstract behavior state set, with the state baseline library;
the detection module is to, in response to a determination that the matching result of the matching module is that the target control instruction sets and the abstract behavior state set are matched with the state baseline set corresponding to the configured production procedure, determine that the control instructions issued by the industrial device during the execution of the configured production procedure are normal, and that the corresponding abstract-behavior-switching triggered by the control instructions issued by the industrial device is normal, and in response to a determination that the matching result of the matching module is not matched, determine that anomaly exists during the execution of the configured production procedure.

9. The apparatus according to claim 8, further comprising:
an identification module, which is to identify an abnormal object existing during the execution of the configured production procedure according to the target control instruction sets, the abstract behavior state set and the state baseline set corresponding to the configured production procedure.

10. The apparatus according to claim 7, further comprising:
a merging process module, which is to, before the matching module matches the target control instruction set constituted for each industrial device based on the obtained control instructions of the industrial device with the pre-established control instruction feature library, perform a merging process for identical control instructions sequentially issued by the industrial device to ensure that one identical control instruction is retained in the target control instruction set.

11. The apparatus according to claim 7, further comprising:
a first receiving module, which is to receive an edit instruction for a target control instruction in the control instruction feature set;
a first adjusting module, which is to adjust the target control instruction in the control instruction feature set according to the edit instruction.

12. The apparatus according to claim 8, further comprising:
a second receiving module, which is to receive an edit instruction for the state baseline set;
a second adjusting module, which is to adjust a target object in a target state baseline set in the state baseline library according to the edit instruction, wherein the target object is a first state baseline, a second state baseline, or a control instruction rule set.

## Patentansprüche

1. Anomalie-Erkennungsverfahren, angewandt auf eine Netzsicherheitsvorrichtung in einem Netz für Betriebstechnik, OT, das Verfahren umfassend:
(S101) Durchführen eines Befehlsanalyseprozesses an gegenwärtig erlangtem industriellem Netzverkehr, der durch Ausführen eines konfigurierten Produktionsverfahrens in dem OT-Netz erzeugt wird, um Steueranweisungen zu erlangen, die von jeder industriellen Vorrichtung in dem OT-Netz sequentiell ausgegeben werden, um während einer Ausführung des konfigurierten Produktionsverfahrens eine entsprechende Abstrakt-Verhalten-Umschaltung durchzuführen;
(S102) Abgleichen einer Ziel-Steueranweisungssatzes, der für jede industrielle Vorrichtung basierend auf erlangten Steueranweisungen der industriellen Vorrichtung mit einer vorab eingerichteten Steueranweisungsmerkmalsbibliothek gebildet ist, wobei die Steueranweisungsmerkmalsbibliothek Steueranweisungsmerkmalsätze umfasst, die durch von jeder industriellen Vorrichtung in dem OT-Netz für verschiedene Abstrakt-Verhalten-Umschaltungen ausgegebene Steueranweisungen gebildet sind;
(S103) als Reaktion auf eine Bestimmung, dass das Abgleichen erfolgreich ist, Bestimmen, dass es in der entsprechenden von der industriellen Vorrichtung während der Ausführung des konfigurierten Produktionsverfahrens durchgeführten Abstrakt-Verhalten-Umschaltung keine Anomalie gibt;
(S104) als Reaktion auf eine Bestimmung, dass das Abgleichen fehlschlägt, Bestimmen, dass es in der entsprechenden von der industriellen Vorrichtung während der Ausführung des konfigurierten Produktionsverfahrens durchgeführten Abstrakt-Verhalten-Umschaltung eine Anomalie gibt.

2. Verfahren nach Anspruch 1, wobei das Verfahren als Reaktion auf eine Bestimmung, dass das Abgleichen für den Ziel-Steueranweisungssatz der industriellen Vorrichtung erfolgreich ist, ferner Folgendes umfasst:
(S301) basierend auf dem Ziel-Steueranweisungssatz der industriellen Vorrichtung, Erlangen eines Abstrakt-Verhalten-Zustandssatzes, der basierend auf von abstraktem Verhalten der industriellen Vorrichtung während des konfigurierten Produktionsverfahrens gebildet wird,
wobei der Abstrakt-Verhalten-Zustandssatz Folgendes umfasst:
eine erste Zustandszeile, die durch Abstrakt-Verhalten-Zustände vor einer entsprechenden Abstrakt-Verhalten-Umschaltung der industriellen Vorrichtung während des konfigurierten Produktionsverfahrens gebildet wird, und
eine zweite Zustandszeile, die durch Abstrakt-Verhalten-Zustände nach der entsprechenden Abstrakt-Verhalten-Umschaltung der industriellen Vorrichtung während des konfigurierten Produktionsverfahrens gebildet wird;
(S302) Erlangen einer vorab eingerichteten Zustandsbasislinienbibliothek, wobei die Zustandsbasislinienbibliothek einen Zustandsbasisliniensatz umfasst, der jeweils jedem in dem OT-Netz vorhandenen Produktionsverfahren entspricht,
wobei der Zustandsbasisliniensatz, der jedem Produktionsverfahren entspricht, ein entsprechendes Verhältnis zwischen jeder normalen Abstrakt-Verhalten-Umschaltung, die in jedem Produktionsverfahren vorhanden ist, einer ersten Zustandsbasislinie, die durch Abstrakt-Verhalten-Zustände jeder industriellen Vorrichtung vor der Umschaltung gebildet wird, einer zweiten Zustandsbasislinie, die durch Abstrakt-Verhalten-Zustände jeder industriellen Vorrichtung nach der Umschaltung gebildet wird, und einem von einer Ziel-Industrievorrichtung bei Auslösen der normalen Abstrakt-Verhalten-Umschaltung auszugebenden Steueranweisungsregelsatz umfasst,
der Steueranweisungsregelsatz ein entsprechendes Verhältnis zwischen einer industriellen Ziel-Vorrichtung, die beim Auslösen der normalen Abstrakt-Verhalten-Umschaltung involviert ist, und dem Steueranweisungsmerkmalsatz der Ziel-Industrievorrichtung umfasst;
(S303) Abgleichen der Ziel-Steueranweisungssätze und des Abstrakt-Verhalten-Zustandssatzes mit der Zustandsbasislinienbibliothek;
(S304) als Reaktion auf eine Bestimmung, dass die Ziel-Steueranweisungssätze und der Abstrakt-Verhalten-Zustandssatz mit dem Zustandsbasisliniensatz übereinstimmen, der dem konfigurierten Produktionsverfahren entspricht, Bestimmen, dass die von der industriellen Vorrichtung während der Ausführung des konfigurierten Produktionsverfahrens ausgegebenen Steueranweisungen normal sind und dass die entsprechende, durch die von der industriellen Vorrichtung ausgegebenen Steueranweisungen ausgelöste Abstrakt-Verhalten-Umschaltung normal ist; und
(S305) als Reaktion auf eine Bestimmung, dass die Ziel-Steueranweisungssätze und der Abstrakt-Verhalten-Zustandssatz nicht mit dem Zustandsbasisliniensatz übereinstimmen, der dem konfigurierten Produktionsverfahren entspricht, Bestimmen, dass während der Ausführung des konfigurierten Produktionsverfahrens eine Anomalie vorhanden ist.

3. Verfahren nach Anspruch 2, wobei das Verfahren ferner Folgendes umfasst:
Identifizieren eines anomalen Objekts, das während der Ausführung des konfigurierten Produktionsverfahrens gemäß den Ziel-Steueranweisungssätzen, dem Abstrakt-Verhalten-Zustandssatz und dem Zustandsbasisliniensatz, der dem konfigurierten Produktionsverfahren entspricht, vorhanden ist.

4. Verfahren nach Anspruch 1, wobei das Verfahren vor Abgleichen des für jede industrielle Vorrichtung basierend auf den erlangten Steueranweisungen der industriellen Vorrichtung gebildeten Ziel-Steueranweisungssatzes mit der vorab eingerichteten Steueranweisungsmerkmalsbibliothek ferner Folgendes umfasst:
Durchführen eines Zusammenführungsprozesses für identische, von der industriellen Vorrichtung sequentiell ausgegebene Steueranweisungen, um sicherzustellen, dass eine identische Steueranweisung in dem Ziel-Steueranweisungssatz beibehalten wird.

5. Verfahren nach Anspruch 1, wobei das Verfahren ferner Folgendes umfasst:
Empfangen einer Bearbeitungsanweisung für eine Ziel-Steueranweisung in dem Steueranweisungsmerkmalsatz;
Anpassen der Ziel-Steueranweisung in dem Steueranweisungsmerkmalsatz gemäß der Bearbeitungsanweisung.

6. Verfahren nach Anspruch 2, wobei das Verfahren ferner Folgendes umfasst:
Empfangen einer Bearbeitungsanweisung für den Zustandsbasisliniensatz;
Anpassen eines Zielobjekts in einem Ziel-Zustandsbasisliniensatz in der Zustandsbasislinienbibliothek gemäß der Bearbeitungsanweisung, wobei das Zielobjekt eine erste Zustandsbasislinie, eine zweite Zustandsbasislinie oder ein Steueranweisungsregelsatz ist.

7. Anomalie-Erkennungsvorrichtung, bereitgestellt in einer Netzsicherheitsvorrichtung in einem Operational-Technology-, OT-, Netz, wobei die Vorrichtung umfasst:
ein Befehlsanalysemodul (401), das zum Durchführen eines Befehlsanalyseprozesses an gegenwärtig erlangtem industriellem Netzverkehr ist, der durch Ausführen eines konfigurierten Produktionsverfahrens in dem OT-Netz erzeugt wird, um Steueranweisungen zu erlangen, die von jeder industriellen Vorrichtung in dem OT-Netz sequentiell ausgegeben werden, um während der Ausführung des konfigurierten Produktionsverfahrens eine entsprechende Abstrakt-Verhalten-Umschaltung durchzuführen;
ein Abgleichmodul (402), das zum Abgleichen eines Ziel-Steueranweisungssatzes, der für jede industrielle Vorrichtung basierend auf erlangten Steueranweisungen der industriellen Vorrichtung gebildet wird, mit einer vorab eingerichteten Steueranweisungsmerkmalsbibliothek ist, wobei die Steueranweisungsmerkmalsbibliothek Steueranweisungsmerkmalsätze umfasst, die durch von jeder industriellen Vorrichtung in dem OT-Netz für verschiedene Abstrakt-Verhalten-Umschaltungen ausgegebene Steueranweisungen gebildet sind;
ein Erkennungsmodul (403), das als Reaktion auf eine Bestimmung, dass das durch das Abgleichmodul durchgeführte Abgleichen erfolgreich ist, zum Bestimmen ist, dass es in der entsprechenden von der industriellen Vorrichtung während der Ausführung des konfigurierten Produktionsverfahrens durchgeführten Abstrakt-Verhalten-Umschaltung keine Anomalie gibt, und als Reaktion auf eine Bestimmung, dass das durch das Abgleichmodul durchgeführte Abgleichen fehlschlägt, zum Bestimmen ist, als Reaktion auf eine Bestimmung, dass das Abgleichen fehlschlägt, Bestimmen, dass es in der entsprechenden von der industriellen Vorrichtung während der Ausführung des konfigurierten Produktionsverfahrens durchgeführten Abstrakt-Verhalten-Umschaltung eine Anomalie gibt.

8. Vorrichtung nach Anspruch 7, ferner umfassend:
ein Erlangungsmodul, das als Reaktion auf eine Bestimmung, dass das durch das Abgleichmodul für den Ziel-Steueranweisungssatz der industriellen Vorrichtung durchgeführte Abgleichen erfolgreich ist, basierend auf dem Ziel-Steueranweisungssatzes der industriellen Vorrichtung zum Erlangen eines Abstrakt-Verhalten-Zustandssatzes ist, der basierend auf abstraktem Verhalten der industriellen Vorrichtung während des konfigurierten Produktionsverfahrens gebildet ist, wobei der Abstrakt-Verhalten-Zustandssatz eine erste Zustandszeile, die durch Abstrakt-Verhalten-Zustände vor einer entsprechenden Abstrakt-Verhalten-Umschaltung der industriellen Vorrichtung während des konfigurierten Produktionsverfahrens gebildet wird, und eine zweite Zustandszeile, die durch Abstrakt-Verhalten-Zustände nach der entsprechenden Abstrakt-Verhalten-Umschaltung der industriellen Vorrichtung während des konfigurierten Produktionsverfahrens gebildet wird, umfasst;
ein Erfassungsmodul, das zum Erlangen einer vorab eingerichteten Zustandsbasislinienbibliothek ist, wobei die Zustandsbasislinienbibliothek einen Zustandsbasisliniensatz umfasst, der jeweils jedem in dem OT-Netz vorhandenen Produktionsverfahren entspricht, der Zustandsbasisliniensatz, der jedem Produktionsverfahren entspricht, ein entsprechendes Verhältnis zwischen jeder normalen Abstrakt-Verhalten-Umschaltung, die in jedem Produktionsverfahren vorhanden ist, einer ersten Zustandsbasislinie, die durch Abstrakt-Verhalten-Zustände jeder industriellen Vorrichtung vor der Umschaltung gebildet wird, einer zweiten Zustandsbasislinie, die durch Abstrakt-Verhalten-Zustände jeder industriellen Vorrichtung nach der Umschaltung gebildet wird, und einem von einer Ziel-Industrievorrichtung bei Auslösen der normalen Abstrakt-Verhalten-Umschaltung auszugebenden Steueranweisungsregelsatz umfasst, der Steueranweisungsregelsatz ein entsprechendes Verhältnis zwischen einer industriellen Ziel-Vorrichtung, die beim Auslösen der normalen Abstrakt-Verhalten-Umschaltung involviert ist, und dem Steueranweisungsmerkmalsatz der Ziel-Industrievorrichtung umfasst;
wobei das Abgleichmodul ferner dazu ist, die Ziel-Steueranweisungssätze und den Abstrakt-Verhalten-Zustandssatz mit der Zustandsbasislinienbibliothek abzugleichen;
das Erkennungsmodul dazu ist, als Reaktion auf eine Bestimmung, dass die Ziel-Steueranweisungssätze und der Abstrakt-Verhalten-Zustandssatz mit dem Zustandsbasisliniensatz übereinstimmen, der dem konfigurierten Produktionsverfahren entspricht, zu bestimmen, dass die von der industriellen Vorrichtung während der Ausführung des konfigurierten Produktionsverfahrens ausgegebenen Steueranweisungen normal sind und dass die entsprechende, durch die von der industriellen Vorrichtung ausgegebenen Steueranweisungen ausgelöste Abstrakt-Verhalten-Umschaltung normal ist, und als Reaktion auf eine Bestimmung, dass die Ziel-Steueranweisungssätze und der Abstrakt-Verhalten-Zustandssatz nicht mit dem Zustandsbasisliniensatz übereinstimmen, der dem konfigurierten Produktionsverfahren entspricht, zu bestimmen, dass während der Ausführung des konfigurierten Produktionsverfahrens eine Anomalie vorhanden ist.

9. Vorrichtung nach Anspruch 8, ferner umfassend:
ein Identifizierungsmodul, das dazu ist, ein anomales Objekt zu identifizieren, das während der Ausführung des konfigurierten Produktionsverfahrens gemäß den Ziel-Steueranweisungssätzen, dem Abstrakt-Verhalten-Zustandssatz und dem Zustandsbasisliniensatz, der dem konfigurierten Produktionsverfahren entspricht, vorhanden ist.

10. Vorrichtung nach Anspruch 7, ferner umfassend:
ein Zusammenführungsprozessmodul, das dazu ist, bevor das Abgleichmodul den für jede industrielle Vorrichtung basierend auf den erlangten Steueranweisungen der industriellen Vorrichtung gebildeten Ziel-Steueranweisungssatz mit der vorab eingerichteten Steueranweisungsmerkmalsbibliothek abgleicht, einen Zusammenführungsprozess für identische, von der industriellen Vorrichtung sequentiell ausgegebene Steueranweisungen durchzuführen, um sicherzustellen, dass eine identische Steueranweisung in dem Ziel-Steueranweisungssatz beibehalten wird.

11. Vorrichtung nach Anspruch 7, ferner umfassend:
ein erstes Empfangsmodul, das dazu ist, eine Bearbeitungsanweisung für eine Ziel-Steueranweisung in dem Steueranweisungsmerkmalsatz zu empfangen;
ein erstes Anpassungsmodul, das dazu ist, die Ziel-Steueranweisung in dem Steueranweisungsmerkmalsatz gemäß der Bearbeitungsanweisung anzupassen.

12. Vorrichtung nach Anspruch 8, ferner umfassend:
ein zweites Empfangsmodul, das dazu ist, eine Bearbeitungsanweisung für den Zustandsbasisliniensatz zu empfangen;
ein zweites Anpassungsmodul, das dazu ist, ein Zielobjekt in einem Ziel-Zustandsbasisliniensatz in der Zustandsbasislinienbibliothek gemäß der Bearbeitungsanweisung anzupassen, wobei das Zielobjekt eine erste Zustandsbasislinie, eine zweite Zustandsbasislinie oder ein Steueranweisungsregelsatz ist.

## Revendications

1. Procédé de détection d'anomalie, appliqué à un dispositif de sécurité de réseau dans un réseau de technologie opérationnelle, OT, le procédé comprenant le fait de :
(S101) effectuer un processus d'analyse d'instructions sur un trafic de réseau industriel obtenu en temps réel, généré par l'exécution d'une procédure de production configurée dans le réseau OT, afin d'obtenir des instructions de commande qui sont émises séquentiellement par chaque dispositif industriel dans le réseau OT pour effectuer un basculement de comportement abstrait correspondant pendant l'exécution de la procédure de production configurée ;
(S102) mettre en correspondance un ensemble cible d'instructions de commande constitué pour chaque dispositif industriel sur la base d'instructions de commande obtenues du dispositif industriel, avec une bibliothèque de caractéristiques d'instructions de commande préétablie, dans lequel la bibliothèque de caractéristiques d'instructions de commande comprend des ensembles de caractéristiques d'instructions de commande constitués par des instructions de commande émises par chaque dispositif industriel dans le réseau OT pour divers basculements de comportement abstrait ;
(S103) en réponse à une détermination selon laquelle la mise en correspondance est réussie, déterminer qu'il n'existe pas d'anomalie dans le basculement de comportement abstrait correspondant effectué par le dispositif industriel pendant l'exécution de la procédure de production configurée ;
(S104) en réponse à une détermination selon laquelle la mise en correspondance échoue, déterminer qu'il existe une anomalie dans le basculement de comportement abstrait correspondant effectué par le dispositif industriel pendant l'exécution de la procédure de production configurée.

2. Procédé selon la revendication 1, dans lequel, en réponse à une détermination selon laquelle la mise en correspondance est réussie pour l'ensemble cible d'instructions de commande du dispositif industriel, le procédé comprend en outre le fait de :
(S301) sur la base de l'ensemble cible d'instructions de commande du dispositif industriel, obtenir un ensemble d'états de comportement abstrait formé sur la base de comportements abstraits du dispositif industriel pendant la procédure de production configurée,
dans lequel l'ensemble d'états de comportement abstrait comprend :
une première ligne d'état constituée par des états de comportement abstrait avant un basculement de comportement abstrait correspondant du dispositif industriel pendant la procédure de production configurée, et
une deuxième ligne d'état constituée par des états de comportement abstrait après le basculement de comportement abstrait correspondant du dispositif industriel pendant la procédure de production configurée ;
(S302) obtenir une bibliothèque de lignes de base d'état préétablie, dans lequel la bibliothèque de lignes de base d'état comprend un ensemble de lignes de base d'état correspondant respectivement à chaque procédure de production existant dans le réseau OT,
l'ensemble de lignes de base d'état correspondant à chaque procédure de production comprenant une relation correspondante entre chaque basculement de comportement abstrait normal existant dans la procédure de production, une première ligne de base d'état constituée par des états de comportement abstrait de chaque dispositif industriel avant le basculement, une deuxième ligne de base d'état constituée par des états de comportement abstrait de chaque dispositif industriel après le basculement, et un ensemble de règles d'instructions de commande à émettre par un dispositif industriel cible lors du déclenchement du basculement de comportement abstrait normal,
l'ensemble de règles d'instructions de commande comprenant une relation correspondante entre un dispositif industriel cible impliqué lors du déclenchement du basculement de comportement abstrait normal et l'ensemble de caractéristiques d'instructions de commande du dispositif industriel cible ;
(S303) mettre en correspondance les ensembles cibles d'instructions de commande et l'ensemble d'états de comportement abstrait, avec la bibliothèque de lignes de base d'état ;
(S304) en réponse à une détermination selon laquelle les ensembles cibles d'instructions de commande et l'ensemble d'états de comportement abstrait correspondent à l'ensemble de lignes de base d'état correspondant à la procédure de production configurée, déterminer que les instructions de commande émises par le dispositif industriel pendant l'exécution de la procédure de production configurée sont normales, et que le basculement de comportement abstrait correspondant déclenché par les instructions de commande émises par le dispositif industriel est normal ; et
(S305) en réponse à une détermination selon laquelle les ensembles cibles d'instructions de commande et l'ensemble d'états de comportement abstrait ne correspondent pas à l'ensemble de lignes de base d'état correspondant à la procédure de production configurée, déterminer qu'une anomalie existe pendant l'exécution de la procédure de production configurée.

3. Procédé selon la revendication 2, dans lequel le procédé comprend en outre le fait de :
identifier un objet anormal existant pendant l'exécution de la procédure de production configurée selon les ensembles cibles d'instructions de commande, l'ensemble d'états de comportement abstrait et l'ensemble de lignes de base d'état correspondant à la procédure de production configurée.

4. Procédé selon la revendication 1, dans lequel, avant la mise en correspondance de l'ensemble cible d'instructions de commande constitué pour chaque dispositif industriel sur la base des instructions de commande obtenues du dispositif industriel avec la bibliothèque de caractéristiques d'instructions de commande préétablie, le procédé comprend en outre le fait de :
effectuer un processus de fusion pour des instructions de commande identiques émises séquentiellement par le dispositif industriel, afin de garantir qu'une instruction de commande identique est conservée dans l'ensemble cible d'instructions de commande.

5. Procédé selon la revendication 1, dans lequel le procédé comprend en outre le fait de :
recevoir une instruction d'édition pour une instruction de commande cible dans l'ensemble de caractéristiques d'instructions de commande ;
ajuster l'instruction de commande cible dans l'ensemble de caractéristiques d'instructions de commande selon l'instruction d'édition.

6. Procédé selon la revendication 2, dans lequel le procédé comprend en outre le fait de :
recevoir une instruction d'édition pour l'ensemble de lignes de base d'état ;
ajuster un objet cible dans un ensemble cible de lignes de base d'état dans la bibliothèque de lignes de base d'état selon l'instruction d'édition, dans lequel l'objet cible est une première ligne de base d'état, une deuxième ligne de base d'état, ou un ensemble de règles d'instructions de commande.

7. Appareil de détection d'anomalie, prévu dans un dispositif de sécurité de réseau dans un réseau de technologie opérationnelle, OT, l'appareil comprenant :
un module d'analyse d'instructions (401), qui est destiné à effectuer un processus d'analyse d'instructions sur un trafic de réseau industriel obtenu en temps réel, généré par l'exécution d'une procédure de production configurée dans le réseau OT, afin d'obtenir des instructions de commande qui sont émises séquentiellement par chaque dispositif industriel dans le réseau OT pour effectuer un basculement de comportement abstrait correspondant pendant l'exécution de la procédure de production configurée ;
un module de mise en correspondance (402), qui est destiné à mettre en correspondance un ensemble cible d'instructions de commande constitué pour chaque dispositif industriel sur la base d'instructions de commande obtenues du dispositif industriel, avec une bibliothèque de caractéristiques d'instructions de commande préétablie, dans lequel la bibliothèque de caractéristiques d'instructions de commande comprend des ensembles de caractéristiques d'instructions de commande constitués par des instructions de commande émises par chaque dispositif industriel dans le réseau OT pour divers basculements de comportement abstrait ;
un module de détection (403), qui est destiné à, en réponse à une détermination selon laquelle la mise en correspondance effectuée par le module de mise en correspondance est réussie, déterminer qu'il n'existe pas d'anomalie dans le basculement de comportement abstrait correspondant effectué par le dispositif industriel pendant l'exécution de la procédure de production configurée, et, en réponse à une détermination selon laquelle la mise en correspondance effectuée par le module de mise en correspondance échoue, déterminer qu'il existe une anomalie dans le basculement de comportement abstrait correspondant effectué par le dispositif industriel pendant l'exécution de la procédure de production configurée.

8. Appareil selon la revendication 7, comprenant en outre :
un module d'obtention, qui est destiné à, en réponse à une détermination selon laquelle la mise en correspondance effectuée par le module de mise en correspondance est réussie pour l'ensemble cible d'instructions de commande du dispositif industriel, sur la base de l'ensemble cible d'instructions de commande du dispositif industriel, obtenir un ensemble d'états de comportement abstrait formé sur la base de comportements abstraits du dispositif industriel pendant la procédure de production configurée, dans lequel l'ensemble d'états de comportement abstrait comprend une première ligne d'état constituée par des états de comportement abstrait avant un basculement de comportement abstrait correspondant du dispositif industriel pendant la procédure de production configurée, et une deuxième ligne d'état constituée par des états de comportement abstrait après le basculement de comportement abstrait correspondant du dispositif industriel pendant la procédure de production configurée ;
un module d'acquisition, qui est destiné à obtenir une bibliothèque de lignes de base d'état préétablie, dans lequel la bibliothèque de lignes de base d'état comprend un ensemble de lignes de base d'état correspondant respectivement à chaque procédure de production existant dans le réseau OT, l'ensemble de lignes de base d'état correspondant à chaque procédure de production comprenant une relation correspondante entre chaque basculement de comportement abstrait normal existant dans la procédure de production, une première ligne de base d'état constituée par des états de comportement abstrait de chaque dispositif industriel avant le basculement, une deuxième ligne de base d'état constituée par des états de comportement abstrait de chaque dispositif industriel après le basculement, et un ensemble de règles d'instructions de commande à émettre par un dispositif industriel cible lors du déclenchement du basculement de comportement abstrait normal, l'ensemble de règles d'instructions de commande comprenant une relation correspondante entre un dispositif industriel cible impliqué lors du déclenchement du basculement de comportement abstrait normal et l'ensemble de caractéristiques d'instructions de commande du dispositif industriel cible ;
dans lequel le module de mise en correspondance est en outre destiné à mettre en correspondance les ensembles cibles d'instructions de commande et l'ensemble d'états de comportement abstrait, avec la bibliothèque de lignes de base d'état ;
le module de détection est destiné à, en réponse à une détermination selon laquelle le résultat de mise en correspondance du module de mise en correspondance est que les ensembles cibles d'instructions de commande et l'ensemble d'états de comportement abstrait correspondent à l'ensemble de lignes de base d'état correspondant à la procédure de production configurée, déterminer que les instructions de commande émises par le dispositif industriel pendant l'exécution de la procédure de production configurée sont normales, et que le basculement de comportement abstrait correspondant déclenché par les instructions de commande émises par le dispositif industriel est normal, et, en réponse à une détermination selon laquelle le résultat de mise en correspondance du module de mise en correspondance est qu'il n'y a pas correspondance, déterminer qu'une anomalie existe pendant l'exécution de la procédure de production configurée.

9. Appareil selon la revendication 8, comprenant en outre :
un module d'identification, qui est destiné à identifier un objet anormal existant pendant l'exécution de la procédure de production configurée selon les ensembles cibles d'instructions de commande, l'ensemble d'états de comportement abstrait et l'ensemble de lignes de base d'état correspondant à la procédure de production configurée.

10. Appareil selon la revendication 7, comprenant en outre :
un module de processus de fusion, qui est destiné à, avant que le module de mise en correspondance ne mette en correspondance l'ensemble cible d'instructions de commande constitué pour chaque dispositif industriel sur la base des instructions de commande obtenues du dispositif industriel avec la bibliothèque de caractéristiques d'instructions de commande préétablie, effectuer un processus de fusion pour des instructions de commande identiques émises séquentiellement par le dispositif industriel, afin de garantir qu'une instruction de commande identique est conservée dans l'ensemble cible d'instructions de commande.

11. Appareil selon la revendication 7, comprenant en outre :
un premier module de réception, qui est destiné à recevoir une instruction d'édition pour une instruction de commande cible dans l'ensemble de caractéristiques d'instructions de commande ;
un premier module d'ajustement, qui est destiné à ajuster l'instruction de commande cible dans l'ensemble de caractéristiques d'instructions de commande selon l'instruction d'édition.

12. Appareil selon la revendication 8, comprenant en outre :
un deuxième module de réception, qui est destiné à recevoir une instruction d'édition pour l'ensemble de lignes de base d'état ;
un deuxième module d'ajustement, qui est destiné à ajuster un objet cible dans un ensemble cible de lignes de base d'état dans la bibliothèque de lignes de base d'état selon l'instruction d'édition, dans lequel l'objet cible est une première ligne de base d'état, une deuxième ligne de base d'état, ou un ensemble de règles d'instructions de commande.
